# EUROPEAN PATENT APPLICATION

(11) **EP 4 647 462 A1**
(43) Date of publication of application: **12.11.2025**
(21) Application number: 23922068.4
(22) Date of filing: 20.02.2023
(51) Int. Cl.: C08J 9/36, C08J 7/048, F24F 3/14

(54) **COMPOSITE MEMBRANE, PREPARATION METHOD THEREFOR, AND USE THEREOF**

(30) Priority: 13.02.2023 CN 202310104919
(71) Applicant: Shenzhen Senior Technology Material Co., Ltd., Shenzhen, Guangdong 518106 (CN)
(72) Inventor: XIONG, Di, Shenzhen, Guangdong 518106 (CN); ZHENG, Lin, Shenzhen, Guangdong 518106 (CN); WANG, Yanjie, Shenzhen, Guangdong 518106 (CN); HUANG, Huizhen, Shenzhen, Guangdong 518106 (CN); CHEN, Li, Shenzhen, Guangdong 518106 (CN); LIN, Lujing, Shenzhen, Guangdong 518106 (CN); CAI, Qi, Shenzhen, Guangdong 518106 (CN)
(74) Representative: Larsen & Birkeholm A/S
(86) International application number: PCT/CN2023/077116
(87) International publication number: WO 2024/168937

(57) **Abstract**

Disclosed herein are a composite membrane, a preparation method therefor, and use thereof. The composite membrane comprises a porous layer and a non-porous dense layer arranged on one side of the porous layer. The non-porous dense layer comprises a polymer mixture and a nanomaterial. The polymer mixture comprises a first polymer and a second polymer. The first polymer comprises a hydrophilic polymer. The second polymer comprises an amphiphilic polymer. The composite membrane of the present application has excellent moisture permeability, gas barrier performance, and water wash durability, and can be used as a heat exchange membrane for assembling a total heat exchange original part according to an existing method for use in an energy recovery ventilator.

## Description

### TECHNICAL FIELD

Embodiments of the present invention relate to the technical field of heat exchange membranes, for example, a composite membrane, a preparation method therefor and use thereof.

### BACKGROUND ART

Along with the deepening of the concept of energy conservation and emission reduction, fresh air exchange systems are required in current public works so as to realize recovery of waste heat of indoor air. Fresh air exchangers utilize heat exchange membrane materials. Heat exchange membranes, which separate introduced outdoor fresh air from indoor air to be discharged, need possess excellent gas barrier performance and excellent moisture permeability, i.e., being capable of efficiently blocking permeation of carbon dioxide, while allowing water vapor passage, thereby enabling relatively high latent heat exchange through mass transfer of water vapor. Heat exchange efficiency of the heat exchange membranes mainly depends on latent heat exchange, i.e., a mass transfer process of water vapor molecules. Mass transfer rate of the mass transfer process of water vapor, like dissolution-diffusion-adsorption process of gas in a heat exchange membrane structure, significantly affects enthalpy heat exchange efficiency of heat exchange membranes. How to realize high-selectivity permeation of heat exchange membranes to water vapor has remained a challenge in improving the enthalpy heat exchange efficiency.

Conventional heat exchange membrane materials are metal membranes, paper membranes or polymer membranes. Metal membranes neither transmit nor accumulate water vapor, and only enable sensible heat exchange with low enthalpy heat exchange efficiency. Paper membrane materials exhibit inferior sensible heat exchange compared with metal membranes, while being prone to fungal colonization and bacterial proliferation due to water accumulation. Polymer membranes have relatively high selective permeability to water vapor and high latent heat exchange efficiency, and are less prone to fungal colonization and bacterial proliferation. Therefore, the polymer membranes have significant advantages when used as total heat exchange membranes.

However, considering long service lifetime and high heat exchange efficiency, heat exchange membrane materials need to have good water resistance and moisture permeability. Related heat exchange membranes mostly use hydrophilic polymers as a bulk structure of the membranes, and thus need to be improved in water resistance and structural stability.

To sum up, it is crucial to develop a composite member having excellent moisture permeability, gas barrier performance and water wash durability.

### SUMMARY

The following is a summary of the subject matter described in detail herein. The present summary is not intended to limit the scope of protection of the claims.

Embodiments of the present invention provide a composite film, a preparation method therefor and use thereof. The composite membrane has excellent moisture permeability, gas barrier performance and water wash durability, and can serve as a heat exchange membrane for assembling a total heat exchange original part according to an existing method for use in an energy recovery ventilator.

In the first aspect, embodiments of the present invention provide a composite membrane, where the composite membrane includes a porous layer and a non-porous dense layer provided on one side of the porous layer;
the non-porous dense layer includes a polymer mixture and a nanomaterial;
the polymer mixture includes a first polymer and a second polymer;
the first polymer includes a hydrophilic polymer; and
the second polymer includes an amphiphilic polymer.

In the present invention, the porous layer serves as a supporting layer and endows the composite membrane with relatively good capacity to withstand transmembrane pressure difference; and the non-porous dense layer belongs to an organic-inorganic hybrid separation membrane, and specifically, the first polymer and the second polymer are bulk materials of the non-porous dense layer.

Herein, the first polymer forms the non-porous dense layer through mutual entanglement between segments, van der Waals force, hydrogen bonding and other actions, and has relatively good gas barrier performance; gas molecules reach a surface of the dense layer through random collision, where segment structures of the hydrophilic polymer interact and bond to water vapor molecules through hydrophilicity thereof, thus the water molecules can be quickly adsorbed and dissolved on the surface of the dense layer and are continuously accumulated to reach a relatively high concentration, while gas molecules such as carbon dioxide (CO₂) are blocked external to the dense layer because they are difficult to be adsorbed and dissolved by the hydrophilic polymer, thus realizing high-selectivity separation of water vapor and gas molecules such as CO₂. Moreover, the polymer segments cannot be completely regularly folded, cavities are generated due to defects of atomic size and random stacking, and unoccupied free volumes between polymer chains can allow the water molecules accumulated on the surface of the non-porous dense layer to reach the other side of the non-porous dense layer through a concentration difference driven Fick diffusion process, thus realizing latent heat exchange.

Self-assembly occurs between the second polymer and the nanomaterial. Hydrophobic segments of the second polymer are entangled on a surface of the nanomaterial through relatively strong interaction with the nanomaterial arising from intermolecular forces such as hydrogen bonding, Van der Waals force, and hydrophobic-hydrophobic interaction. Polymer chains are adsorbed on the surface of the nanomaterial, and further the amphiphilic polymer forms a non-covalent cross-linked network with the nanomaterial as a "joint" therebetween. The hydrophilic segments ensure stable dispersion of the amphiphilic polymer in a bulk hydrophilic separation membrane layer composed of the first polymer, and facilitates maintaining a stable separation membrane layer structure. In addition, a cross-linking effect improves regularity of the polymer chains in the polymer network, and also improves the gas barrier performance of the membrane layer.

Therefore, the composite membrane of the present invention satisfies requirements of high-selectivity gas barrier and high moisture permeability, and has water wash durability, and good antibacterial and antifungal properties, and long service lifetime.

Preferably, the porous layer is other than non-woven fabric.

Preferably, the porous layer satisfies one or a combination of more of:
A. a thickness of the porous layer being 5-50 µm
B. porosity of the porous layer being 30%-60%
C. a pore size of the porous layer being 10-70 nm
D. tensile strength of the porous layer being ≥ 1,300 kgf/cm²
E. puncture strength of the porous layer being ≥ 300 gf.

Herein, the thickness of the porous layer is 5-50 µm, such as 10 µm, 15 µm, 20 µm, 25 µm, 30 µm, 35 µm, 40 µm, and 45 µm.

The porosity of the porous layer is 30%-60%, such as 35%, 40%, 45%, 50%, and 55%.

The pore size of the porous layer is 10-70 nm, such as 20 µm, 30 µm, 40 µm, 50 µm, and 60 µm.

In the present invention, the pore size of the porous layer is not particularly limited, but the pore size is preferably in the range of 10-70 nm, because too high porosity will reduce performance of a microporous diaphragm to withstand a transmembrane pressure difference; and too low porosity will reduce an effective mass transfer area, being adverse to improvement of the enthalpy heat exchange efficiency.

In the present invention, uniformly distributed pore size and moderate porosity can effectively improve latent heat efficiency and enthalpy efficiency of the composite membrane when used in an energy recovery ventilator.

The tensile strength of the porous layer is ≥ 1,300 kgf/cm², such as 1,400 kgf/cm², 1,500 kgf/cm², 1,600 kgf/cm², and 1,700 kgf/cm².

The puncture strength of the porous layer is ≥ 300 kgf, such as 350 kgf/cm², 400 kgf/cm², 450 kgf/cm², and 500 kgf/cm².

In the present invention, relatively high tensile strength and puncture strength ensure good capability of the composite membrane to withstand the transmembrane pressure difference, particularly when the composite membrane is of an asymmetric structure.

Preferably, materials of the porous layer include thermoplastic resin.

Preferably, the thermoplastic resin includes any one or a combination of at least two of polyethylene, polypropylene, polyvinylidene fluoride or polysulfone, where typical but non-limiting combinations include: a combination of polyethylene and polypropylene, a combination of polypropylene, polyvinylidene fluoride and polysulfone, a combination of polyethylene, polypropylene, polyvinylidene fluoride and polysulfone, etc.

Preferably, the first polymer includes a group capable of forming a hydrogen bond with water.

Preferably, the group is any one or a combination of at least two of -OH, -C=O-, -NH₂, - CN, -CONH, -CON-, -C-O-C- or -COOH, such as a combination of -OH and -C=O-, a combination of -NH₂, -CN, -CONH, -CON- and -C-O-C-, and a combination of -NH₂, -CN, - CONH, -CON-, -C-O-C- and -COOH.

Preferably, the first polymer includes any one or a combination of at least two of polyvinylpyrrolidone, polyoxyethylene, polyacrylamide, polyvinyl alcohol, polyacrylic acid, polymethacrylic acid, poly hydroxyethyl methacrylate, polymaleic anhydride, chitosan, cellulose acetate, ethyl cellulose, carboxymethyl cellulose, hypromellose, gelatin or Arabic gum, where typical but non-limiting combinations thereof include: a combination of polyvinylpyrrolidone and polyoxyethylene, a combination of polyacrylamide, polyvinyl alcohol, polyacrylic acid, polymethacrylic acid and poly hydroxyethyl methacrylate, and a combination of ethyl cellulose, carboxymethyl cellulose, hypromellose, gelatin and Arabic gum.

Preferably, the first polymer has a molecular weight of 20-1,000 kDa, such as 50 kDa, 100 kDa, 200 kDa, 400 kDa, 600 kDa, and 800 kDa.

In the present invention, the molecular weight of the first polymer is preferably in the range of 20-1,000 kDa. When the molecular weight is < 20 kDa, the first polymer has relatively poor membrane-forming property, leading to poor gas barrier performance of the non-porous dense layer, and failing to realize high-efficiency separation of H₂O molecules from other gas molecules. When the molecular weight is > 1,000 kDa, the first polymer can hardly be well dissolved in a solvent, and the non-porous dense layer has poor water resistance and is structurally unstable.

Preferably, the second polymer includes any one or a combination of at least two of poly(ethylene glycol)-b-poly(caprolactone) copolymer, poly(ethylene glycol)-b-poly(lactide) copolymer, hydrophobically modified hypromellose or poly(ethylene oxide)-poly(propylene oxide)-poly(ethylene oxide) triblock copolymer, where typical but non-limiting combinations thereof include: a combination of poly(ethylene glycol)-b-poly(caprolactone) copolymer and poly(ethylene glycol)-b-poly(lactide) copolymer, a combination of poly(ethylene glycol)-b-poly(lactide) copolymer, hydrophobically modified hypromellose and poly(ethylene oxide)-poly(propylene oxide)-poly(ethylene oxide) triblock copolymer, a combination of poly(ethylene glycol)-b-poly(caprolactone) copolymer, poly(ethylene glycol)-b-poly(lactide) copolymer, hydrophobically modified hypromellose and poly(ethylene oxide)-poly(propylene oxide)-poly(ethylene oxide) triblock copolymer, etc.

Preferably, in the second polymer, a molecular weight ratio of the hydrophilic segments to the hydrophobic segments is 1:(0.2-5), where 0.2-5 may be 0.5, 1, 2, 3, 4, etc.

In the present invention, in the second polymer, the molecular weight ratio of the hydrophilic segments to the hydrophobic segments is preferably in the range of 1:(0.2-5), because when the molecular weight ratio of the hydrophilic and hydrophobic segments is > 1:0.2, interactions formed between the second polymer and the nanomaterial through self-assembly are relatively weak, and a formed non-covalent cross-linked network structure has relatively poor stability, leading to reduced structural stability of the non-porous dense layer; and when the molecular weight ratio of the hydrophilic and hydrophobic segments is < 1:5, second polymer chains have relatively strong hydrophobicity, and fail to be well compatible with the first polymer, thus reducing the gas barrier performance of the non-porous dense layer.

Preferably, a mass ratio of the first polymer to the second polymer is (2-20): 1, where 2-20 may be 4, 6, 8, 10, 12, 14, 16, 18, etc.

Preferably, a mass ratio of the nanomaterial to the polymer mixture is 1:(0.5-40), where 0.5-40 may be 1, 5, 10, 15, 20, 25, 30, 35, etc.

In the present invention, the mass ratio of the nanomaterial to the polymer mixture is preferably in the range of 1:(0.5-40), because when the mass ratio of the two is > 1:0.5 (referring to a specific value of the ratio of the two, i.e., 2, and the same being applied analogously to other similar expressions), excessive nanomaterials on the surface of the composite membrane increase gas diffusion paths, improve the gas barrier performance of the membrane, while also affect absorption and diffusion rates of water vapor molecules, thus reducing the moisture permeability performance of the membrane; and when the mass ratio of the two is < 1:40, the non-covalent cross-linked network formed through effective entanglement action between the nanomaterial and the second polymer has relatively poor stability, and the gas barrier performance and regularity of the composite membrane become deteriorated.

Preferably, the nanomaterial includes any one or a combination of at least two of silica, aluminum oxide, montmorillonite, barium titanate, titanium dioxide, barium titanate, gold, polystyrene, silver, lithium aluminum titanium phosphate, cellulose, hydroxyapatite or carbon, where typical but non-limiting combinations include: a combination of silica, aluminum oxide, montmorillonite, barium titanate and titanium dioxide, a combination of titanium dioxide, barium titanate, gold, polystyrene, silver, lithium aluminum titanium phosphate and cellulose, a combination of silver, lithium aluminum titanium phosphate, cellulose, hydroxyapatite and carbon, etc.

Preferably, the nanomaterial is in at least one form of particulate form, sheet form, linear form, rod-shaped form or tubular form.

Preferably, the nanomaterial has a particle size or diameter of 5-500 nm, such as 50 nm, 100 nm, 150 nm, 200 nm, 250 nm, 300 nm, 350 nm, 400 nm, and 450 nm.

In the present invention, the particle size or diameter of the nanomaterial is preferably in the range of 5-500 nm. When the particle size or diameter is > 500 nm, the nanomaterial will cause decreased structural regularity and compactness of the non-porous dense layer, being adverse to high gas barrier performance; and when the particle size or diameter is < 5 nm, the non-covalent interaction between the nanomaterial and the polymer segments is relatively poor, and the formed non-covalent cross-linked structure exhibits poor stability.

In the present invention, the particle size of the nanomaterial is directed to non-spherical materials; and the diameter is directed to spherical materials.

Preferably, the thickness of the non-porous dense layer is 0.01-20 µm, such as 0.05 µm, 0.1 µm, 0.5 µm, 1 µm, 2 µm, 4 µm, 6 µm, 8 µm, 10 µm, 12 µm, 14 µm, 16 µm, and 18 µm.

Preferably, the non-porous dense layer further includes a water-soluble inorganic salt.

In the present invention, inorganic salt ions uniformly distributed in the non-porous dense layer can effectively improve hydrophilicity of the surface of the non-porous dense layer, facilitate binding to water vapor molecules on the surface, and enhance adsorption and dissolution of water molecules on the surface of the non-porous dense layer. At the same time, the water-soluble inorganic salt destroys crystalline regions of the hydrophilic polymer inside the non-porous dense layer, and forms more microscopic cavities and free volumes, thus effectively increasing the diffusion and transfer rates of the water molecules inside the non-porous dense layer. Gas molecules are adsorbed and dissolved on the surface thereof, which process determines its distribution proportions in the layer and in air; then, the gas molecules are driven by a mass transfer driving force to diffuse in the layer until reaching the other side of the layer; and finally, the gas molecules are desorbed, which process has little influence on the mass transfer. In the above process, dissolution and diffusion determine the mass transfer efficiency of the composite membrane. In addition, the metal ions of the water-soluble inorganic salt and carboxylate functional groups of the polymer salt form a cross-linked structure therebetween through ionic bonding complexation. Such relatively strong ionic bonding yields a relatively stable cross-linked structure, serving as a cross-linked network mutually penetrating, thus effectively improving the structural stability of the non-porous dense layer.

Preferably, a mass ratio of the water-soluble inorganic salt to the polymer mixture is 1:(0.25-40), where 0.25-40 may be 0.5, 1, 2, 5, 10, 15, 20, 25, 30, 35, etc.

In the present invention, the mass ratio of the water-soluble inorganic salt to the polymer mixture is preferably in the range of 1:(0.25-40), because when the mass ratio of the two is > 1:0.25, the inorganic salt reduces compactness of the separation membrane, finally reducing the gas barrier performance of the separation membrane; and when the mass ratio of the two is < 1:40, internal cavities and free volumes are insufficient, the diffusion and transfer rates of water molecules are significantly reduced, while the cross-linked network structure formed by the inorganic salt and the polymer salt has poor stability.

Preferably, the water-soluble inorganic salt includes any one or a combination of at least two of magnesium chloride, magnesium sulfate, calcium chloride, calcium nitrate, zinc nitrate, zinc chloride or zinc sulfate, where typical but non-limiting combinations include: a combination of magnesium chloride, magnesium sulfate and calcium chloride, a combination of calcium nitrate, zinc nitrate, zinc chloride and zinc sulfate, a combination of magnesium chloride, magnesium sulfate, calcium chloride, calcium nitrate, zinc nitrate, zinc chloride and zinc sulfate, etc.

Preferably, the polymer mixture further includes a polymer salt.

Preferably, the polymer salt includes a carboxylate-containing polymer salt.

Preferably, in the polymer salt, a molar ratio of carboxylates to polymer monomers employed in forming the polymer salt is 1:(1-20), where 1-20 may be 2, 4, 6, 8, 10, 12, 14, 16, 18, etc.

Preferably, the polymer salt has a molecular weight of 2-200 kDa, such as 5 kDa, 10 kDa, 20 kDa, 40 kDa, 60 kDa, 80 kDa, 100 kDa, 120 kDa, 140 kDa, 160 kDa, and 180 kDa.

In the present invention, the molecular weight of the polymer salt is preferably in the range of 2-200 kDa, because when the molecular weight is < 2 kDa, the cross-linking action between the carboxylate functionalized polymer salt and the metal ions of the water-soluble inorganic salt is relatively weak, thus reducing the water resistance of the non-porous dense layer; and when the molecular weight is > 200 kDa, the cross-linking action between the carboxylate functionalized polymer salt and the metal ions of the water-soluble inorganic salt is too strong, and three-phase mixture is highly viscous, resulting in deteriorated uniformity and compactness of the non-porous dense layer.

Preferably, the polymer salt includes a monovalent organic salt.

In the present invention, the polymer mixture includes a carboxylate polymer salt, further preferably a monovalent organic salt, where carboxylate groups on the monovalent organic salt are capable of forming crosslinking between polymers through ionic bonding with divalent and multivalent ions. The cross-linking action between the carboxylate-functionalized polymer salt and the metal ions of the water-soluble inorganic salt will further enhance the structural stability of the membrane, and improve the water wash durability thereof.

Preferably, the polymer salt includes any one or a combination of at least two of sodium carboxymethyl cellulose, sodium alginate, potassium alginate, lithium carboxymethyl cellulose, sodium hyaluronate, sodium polymethacrylate, potassium polyacrylate or sodium polyacrylate, where typical and non-limiting combinations include: a combination of sodium carboxymethyl cellulose, sodium alginate and potassium alginate, a combination of potassium alginate, lithium carboxymethyl cellulose, sodium hyaluronate and sodium polymethacrylate, a combination of sodium hyaluronate, sodium polymethacrylate, potassium polyacrylate and sodium polyacrylate, etc.

Preferably, a mass ratio of the polymer salt to the first polymer is 1:(2-30), where 2-30 may be 5, 10, 15, 20, 25, etc.

In the present invention, the mass ratio of the polymer salt to the first polymer is preferably in the range of 1:(2-30), because when the mass ratio of the two is > 1:2, the compactness of the separation membrane layer is affected; and when the mass ratio of the two is < 1:30, the interpenetrating cross-linked network structure has poor stability and poor water resistance, thus greatly reducing the service lifetime of the composite membrane.

In conclusion, in order to improve the water wash durability of conventional membranes, ultraviolet or chemical cross-linking is typically performed on separation membrane layers, which, although improving the structural stability of the membranes, also destroys structural regularity of separation membranes, and reduces the gas barrier and moisture permeability thereof. The non-porous dense layer in the composite membrane of the present invention forms a triple interpenetrating network structure, and performs non-covalent cross-linking using the Van der Waals force between the polymer chains and the inorganic nanomaterial and an electrostatic force between the polymer chains and the inorganic salt metal ions, so as to achieve a triple interpenetrating effect of the polymer network, enhance the structural stability of the non-porous dense layer, i.e., the separation membrane layer, and endow the composite membrane with relatively good water wash durability. Furthermore, by adjusting amounts and ratios of the polymer chains and the inorganic salt metal ions, absorption, dissolution and diffusion processes of the water vapor molecules of the composite membrane are regulated, thereby being capable of easily and effectively regulating the moisture permeability of the heat exchange membrane, and realizing flexible control over the heat exchange efficiency of the composite membrane.

The non-porous dense layer, i.e., organic-inorganic hybrid separation membrane, refers to an organic-inorganic hybrid membrane, which is prepared by a method of solvent dispersing and coating and the like for a three-phase mixture and has a non-covalent cross-linked triple interpenetrating network structure with a dense macroscopic structure and having nano water molecule channels inside.

Preferably, a protective layer is further provided on an outer side of the non-porous dense layer.

Preferably, the protective layer satisfies one or a combination of more of:
a. a surface contact angle of the protective layer being >90°;
b. a thickness of the protective layer being in a range of 5-150 µm; and
c. a pore size of the protective layer being 1-70 µm.

The surface contact angle of the protective layer is > 90°, such as 95°, 100°, 110°, and 120°.

In the present invention, a hydrophobic structure of the protective layer can protect the middle non-porous dense layer from damaging effects such as erosion and swelling of liquid water, being beneficial to maintaining structural compactness of the non-porous dense layer. When the surface contact angle is ≤90°, the protective layer fails to effectively block liquid water, which is not conducive to protecting the dense structure of the non-porous dense layer.

The thickness of the protective layer is 5-150 µm, such as 10 µm, 20 µm, 40 µm, 60 µm, 80 µm, 100 µm, 120 µm, and 140 µm.

In the present invention, the thickness of the protective layer is preferably in the range of 5-150 µm, because non-woven fabric thinner than 5 µm fails to effectively block liquid water, and non-woven fabric thicker than 150 µm hinders water vapor mass transfer process across a heat exchange membrane surface.

The pore size of the protective layer is 1-70 µm, such as 5 µm, 10 µm, 20 µm, 30 µm, 40 µm, 50 µm, and 60 µm.

Preferably, the protective layer includes non-woven fabric.

Preferably, a material of the non-woven fabric includes any one or a combination of at least two of polyolefin, polyester or cellulose, where typical but non-limiting combinations include: a combination of polyolefin and polyester, a combination of polyester and cellulose, a combination of polyolefin, polyester and cellulose, etc.

Preferably, the non-woven fabric includes any one or a combination of at least two of polyethylene terephthalate non-woven fabric, polypropylene non-woven fabric, polyethylene non-woven fabric or cellulose non-woven fabric, where typical but non-limiting combinations include: a combination of polyethylene terephthalate non-woven fabric and polypropylene non-woven fabric, a combination of polypropylene non-woven fabric, polyethylene non-woven fabric and cellulose non-woven fabric, a combination of polyethylene terephthalate non-woven fabric, polypropylene non-woven fabric, polyethylene non-woven fabric and cellulose non-woven fabric, etc.

In the second aspect, embodiments of the present invention provide a preparation method for the composite membrane according to the first aspect, including steps of:
mixing the first polymer, the second polymer and the nanomaterial, forming a dispersion, coating the dispersion on one side or two sides of the porous layer, and drying, to form the non-porous dense layer, thus rendering the composite membrane.

In the present invention, the preparation method includes dispersing a preparation raw material of the non-porous dense layer in a solvent, forming the dispersion containing a triple interpenetrating network structure through self-assembly, coating the dispersion on one side of the porous layer through a coating process (e.g., blade coating, roll coating, and spray coating), and drying (e.g., thermal drying or air drying) to render the membrane, so as to form a dense organic-inorganic hybrid separation membrane layer, i.e., a dense layer, thus forming the composite membrane.

Further preferably, the protective layer can also be selectively compounded on the non-porous dense layer by a common method such as roll pressing and adhesive bonding, and the formed composite membrane has a three-layer structure of porous layer-non-porous dense layer-protective layer.

Preferably, the preparation method further includes providing a protective layer on an outer side of the non-porous dense layer.

Preferably, the protective layer is provided by roll pressing and/or adhesive bonding.

Preferably, the dispersion further includes a solvent and an aid.

Preferably, the solvent includes any one or a combination of at least two of water, ethanol or isopropanol, where typical but non-limiting combinations include: a combination of water and ethanol, a combination of ethanol and isopropanol, a combination of water, ethanol and isopropanol, etc.

Preferably, the aid includes a wetting agent and/or an adhesive.

Preferably, based on a total mass of the solvent being 100%, a mass percentage of the wetting agent is 0.1%-1%, such as 0.2%, 0.4%, 0.6%, and 0.8%.

Preferably, the wetting agent includes an anionic surfactant and/or a nonionic surfactant.

Preferably, the wetting agent includes a polyether-modified polysiloxane compound and/or an alkyne diol compound.

Preferably, based on a total mass of the solvent being 100%, a mass percentage of the adhesive is 0.5%-5%, such as 1%, 1.5%, 2%, 2.5%, 3%, 3.5%, 4%, and 4.5%.

Preferably, the adhesive includes any one or a combination of at least two of a polyvinyl acetate adhesive, a polyacrylic adhesive, a polyurethane adhesive, an epoxy resin adhesive, a phenolic resin adhesive or an organic silicon adhesive, where typical and non-limiting combinations include: a combination of a polyvinyl acetate adhesive and a polyacrylic adhesive, a combination of a polyurethane adhesive, an epoxy resin adhesive and a phenolic resin adhesive, a combination of a polyurethane adhesive, an epoxy resin adhesive, a phenolic resin adhesive and a silicone adhesive, etc.

In the third aspect, embodiments of the present invention provide a fresh air exchanger, including the composite membrane according to the first aspect or the composite membrane prepared by the preparation method according to the second aspect.

In the present invention, when the composite membrane is used in the fresh air exchanger, water vapor can be quickly adsorbed and dissolved into the non-porous dense layer, with high transport and permeation rates, while gases such as carbon dioxide are difficult to adsorb and dissolve in the non-porous dense layer, with a low permeation rate, and can hardly penetrate through the surface of the non-porous dense layer into the composite membrane. The above process realizes high-selectivity separation of the composite membrane for water vapor and other gases, not only efficiently blocking mass transfer of other gases except water molecules, and avoiding contamination of discharged indoor air to introduced fresh air, but also ensuring high-efficiency mass transfer of water vapor, achieving high-efficiency latent heat exchange, and further achieving high enthalpy heat exchange efficiency of the composite membrane.

Compared with related technologies, the embodiments of the present invention have following beneficial effects.
(1) In the embodiments of the present invention, the composite membrane has excellent moisture permeability, gas barrier performance and water wash durability, and can serve as a heat exchange membrane for assembling a total heat exchange original part according to an existing method for use in an energy recovery ventilator.
(2) The moisture permeability of the composite membrane of the embodiments of the present invention ranges from 510 g/(m²·24h) to 1,620 g/(m²·24h), the air permeability ranges from 14,100 s/100 mL to 37,000 s/100 mL; and in water wash durability tests, the moisture permeability varies between Grade I and Grade II, and the gas barrier varies between Grade A and Grade C.

Other aspects cab be understood upon reading and comprehending the drawing and detailed description.

### BRIEF DESCRIPTION OF DRAWING

Drawing, for further understanding of the present invention, constitutes a part of the description, illustrates the technical solutions of the present invention together with embodiments of the present invention, and does not constitute limitation to the technical solutions herein.

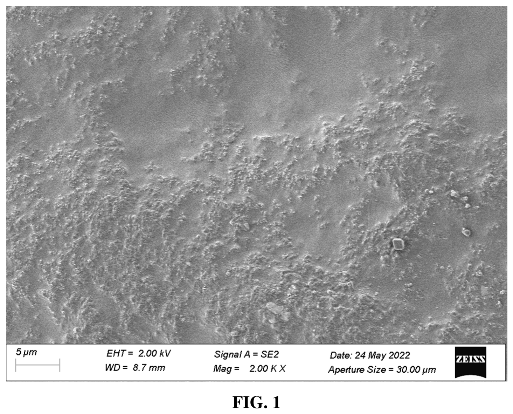

FIG. 1 is a surface topography map of a non-porous dense layer of the composite membrane according to Example 1.

### DETAILED DESCRIPTION OF EMBODIMENTS

Technical solutions of the present invention are further described below through embodiments. Those skilled in the art should know that the examples are merely for helping understand the present invention, but should not be considered as specific limitation to the present invention.

In the present invention, ourchasing information about some raw materials in various embodiments is as follows.

Polyethylene diaphragm: purchased from Shenzhen Senior Technology Material Co., Ltd., with a thickness of 20 µm, a porosity of 48%, a pore size of 38 nm, tensile strength ≥ 1700 kgf/cm², and puncture strength ≥ 700 gf.

Polypropylene diaphragm: purchased from Shenzhen Senior Technology Material Co., Ltd., with a thickness of 16 µm, a porosity of 51%, a pore size of 37 nm, tensile strength ≥ 110 kgf/cm², and puncture strength ≥ 250 gf.

### Examples 1-14 and Comparative Examples 1-11

Examples 1-14 and Comparative Examples 1-11 each provided a composite membrane, where the composite membrane included a porous layer, a non-porous dense layer and a protective layer laminated in sequence. By taking Example 1 as an example, a surface topography map thereof is as shown in FIG. 1.

Specifically, information about each layer is as follows.

Porous layer: Except polypropylene diaphragm in Example 14, it was polyethylene diaphragm.

Protective layer: A material was non-woven fabric made from polyethylene terephthalate.

Non-porous dense layer: with a thickness of 2 µm, and specific composition as listed in Table 1.

**Table 1**

| | Polymer Mixture | | | | | Mass Fraction (%) of Polymer Mixture | Inorganic Nanomaterial | Mass Fraction (%) of Inorganic Nanomaterial | Nanomaterial: Polymer Mixture | Water-soluble Inorganic Salt | Mass Fraction (%) of Water-soluble Inorganic Salt | Inorganic Salt: Polymer Mixture |
|---|---|---|---|---|---|---|---|---|---|---|---|---|
| | First Polymer (hydrophilic) | Second Polymer (amphiprotic) | Polymer Salt | Second Polymer: First Polymer | Polymer Salt: First Polymer | | | | | | | |
| Example 1 | Polyvinylpyrrolidone | Poly(ethylene glycol)-b-poly(caprolactone) | - | 1:5 | - | 5 | Barium titanate | 1 | 1:5 | - | - | - |
| Example 2 | Polyvinylpyrrolidone | Poly(ethylene glycol)-b-poly(caprolactone) | - | 1:5 | - | 5 | Barium titanate | 1 | 1:5 | Calcium chloride | 2.5 | 1:2 |
| Example 3 | Polyvinylpyrrolidone | Poly(ethylene glycol)-b-poly(caprolactone) | Sodium carboxymethyl cellulose | 1:5 | 1:10 | 5 | Barium titanate | 1 | 1:5 | Calcium chloride | 2.5 | 1:2 |
| Example 4 | Polyvinylpyrrolidone | Poly(ethylene glycol)-b-poly(caprolactone) | Sodium carboxymethyl cellulose | 1:5 | 1:10 | 5 | Barium titanate | 0.125 | 1:40 | Calcium chloride | 2.5 | 1:2 |
| Example 5 | Polyvinylpyrrolidone | Poly(ethylene glycol)-b-poly(caprolactone) | Sodium carboxymethyl cellulose | 1:5 | 1:10 | 5 | Barium titanate | 10 | 2:1 | Calcium chloride | 2.5 | 1:2 |
| Example 6 | Polyvinylpyrrolidone | Poly(ethylene glycol)-b-poly(caprolactone) | Sodium carboxymethyl cellulose | 1:5 | 1:10 | 5 | Barium titanate | 1 | 1:5 | Calcium chloride | 0.125 | 1:40 |
| Example 7 | Polyvinylpyrrolidone | Poly(ethylene glycol)-b-poly(caprolactone) | Sodium carboxymethyl cellulose | 1:5 | 1:10 | 5 | Barium titanate | 1 | 1:5 | Calcium chloride | 20 | 4:1 |
| Example 8 | Polyvinylpyrrolidone | Poly(ethylene glycol)-b-poly(caprolactone) | Sodium carboxymethyl cellulose | 1:20 | 1:10 | 5 | Barium titanate | 1 | 1:5 | Calcium chloride | 2.5 | 1:2 |
| Example 9 | Polyvinylpyrrolidone | Poly(ethylene glycol)-b-poly(caprolactone) | Sodium carboxymethyl cellulose | 1:2 | 1:10 | 5 | Barium titanate | 1 | 1:5 | Calcium chloride | 2.5 | 1:2 |
| Example 10 | Polyvinylpyrrolidone | Poly(ethylene glycol)-b-poly(caprolactone) | Sodium carboxymethyl cellulose | 1:5 | 1:30 | 5 | Barium titanate | 1 | 1:5 | Calcium chloride | 2.5 | 1:2 |
| Example 11 | Polyvinylpyrrolidone | Poly(ethylene glycol)-b-poly(caprolactone) | Sodium carboxymethyl cellulose | 1:5 | 1:2 | 5 | Barium titanate | 1 | 1:5 | Calcium chloride | 2.5 | 1:2 |
| Example 12 | Hypromellose | Poly(ethylene glycol)-b-poly(caprolactone) | Sodium carboxymethyl cellulose | 1:5 | 1:10 | 5 | Silica | 1 | 1:5 | Magnesium chloride | 2.5 | 1:2 |
| Example 13 | Polyvinyl alcohol | Hydrophobically modified hypromellose | Sodium carboxymethyl cellulose | 1:5 | 1:10 | 5 | Cellulose nanofiber | 1 | 1:5 | Calcium chloride | 2.5 | 1:2 |
| Example 14 | Polyacrylamide | Hydrophobically modified hypromellose | Sodium carboxymethyl cellulose | 1:5 | 1:10 | 5 | Silica | 1 | 1:5 | Zinc chloride | 2.5 | 1:2 |
| Example 15 | Polyvinylpyrrolidone | Poly(ethylene glycol)-b-poly(caprolactone) | Sodium carboxymethyl cellulose | 1:5 | 1:10 | 5 | Barium titanate | 0.1 | 1:50 | Calcium chloride | 2.5 | 1:2 |
| Example 16 | Polyvinylpyrrolidone | Poly(ethylene glycol)-b-poly(caprolactone) | Sodium carboxymethyl cellulose | 1:5 | 1:10 | 5 | Barium titanate | 15 | 3:1 | Calcium chloride | 2.5 | 1:2 |
| Example 17 | Polyvinylpyrrolidone | Poly(ethylene glycol)-b-poly(caprolactone) | Sodium carboxymethyl cellulose | 1:5 | 1:10 | 5 | Barium titanate | 1 | 1:5 | Calcium chloride | 0.1 | 1:50 |
| Example 18 | Polyvinylpyrrolidone | Poly(ethylene glycol)-b-poly(caprolactone) | Sodium carboxymethyl cellulose | 1:5 | 1:10 | 5 | Barium titanate | 1 | 1:5 | Calcium chloride | 25 | 5:1 |
| Example 19 | Polyvinylpyrrolidone | Poly(ethylene glycol)-b-poly(caprolactone) | Sodium carboxymethyl cellulose | 1:40 | 1:10 | 5 | Barium titanate | 1 | 1:5 | Calcium chloride | 2.5 | 1:2 |
| Example 20 | Polyvinylpyrrolidone | Poly(ethylene glycol)-b-poly(caprolactone) | Sodium carboxymethyl cellulose | 1:1 | 1:10 | 5 | Barium titanate | 1 | 1:5 | Calcium chloride | 2.5 | 1:2 |
| Example 21 | Polyvinylpyrrolidone | Poly(ethylene glycol)-b-poly(caprolactone) | Sodium carboxymethyl cellulose | 1:5 | 1:50 | 5 | Barium titanate | 1 | 1:5 | Calcium chloride | 2.5 | 1:2 |
| Example 22 | Polyvinylpyrrolidone | Poly(ethylene glycol)-b-poly(caprolactone) | Sodium carboxymethyl cellulose | 1:5 | 1:1 | 5 | Barium titanate | 1 | 1:5 | Calcium chloride | 2.5 | 1:2 |
| Comparative Example 1 | Polyvinylpyrrolidone | Poly(ethylene glycol)-b-poly(caprolactone) | - | 1:5 | 1:10 | 5 | - | - | - | - | - | - |
| Comparative Example 2 | Polyvinylpyrrolidone | - | - | - | - | 5 | Barium titanate | 1 | 1:0 | - | - | - |
| Comparative Example 3 | - | - | - | - | - | - | - | - | - | - | - | - |

In Table 1, a mass fraction of the polymer mixture is based on the total dispersion, and the same is applied to inorganic nanomaterials and salts.

The composite membrane was obtained by a preparation method including steps of:
dispersing a preparation raw material of the non-porous dense layer in water, forming the dispersion containing an interpenetrating network structure through self-assembly, coating the dispersion on one side of the porous layer, drying, so as to obtain a non-porous dense layer, and then compounding the protective layer on the non-porous dense layer through roll pressing, thus rending the composite membrane.

### Performance Tests

The composite membranes obtained in Examples 1-22 and Comparative Examples 1-3 were subjected to following tests.
(1) Moisture permeability: Test was conducted in accordance with GB/T 2679.2-2015, where the moisture permeability is grade I when varied within ±15%, and grade II when varied exceeding ±15%, and the moisture permeability I is superior to II.
(2) Gas barrier performance: Test was conducted in accordance with GB/T 36363-2018, where the gas barrier performance is graded A when decrease is < 10%, grade B when decrease is 10-25%, and grade C when decrease is > 25%, and performance ranking is A > B > C.
(3) Water wash durability: After immersed in water for 30 days, the composite membrane was tested for the moisture permeability and the gas barrier performance.

Test results are summarized in Table 2.

**Table 2**

| | Moisture Permeability (g/(m²·24h)) | Air Permeability (s/100 mL) | Water Wash Durability | |
|---|---|---|---|---|
| | | | Moisture Permeability Variation (%) | Gas Barrier Variation (%) |
| Example 1 | 510 | 25000 | I | B |
| Example 2 | 1550 | 24700 | I | B |
| Example 3 | 1570 | 25000 | I | A |
| Example 4 | 1495 | 20000 | I | A |
| Example 5 | 1100 | 33000 | I | A |
| Example 6 | 990 | 24500 | I | B |
| Example 7 | 1580 | 25500 | II | B |
| Example 8 | 1500 | 23000 | I | B |
| Example 9 | 1410 | 23510 | I | A |
| Example 10 | 1380 | 23450 | I | B |
| Example 11 | 1520 | 18100 | I | A |
| Example 12 | 1500 | 25500 | I | A |
| Example 13 | 1560 | 24900 | I | A |
| Example 14 | 1501 | 25100 | I | A |
| Example 15 | 1490 | 19000 | I | B |
| Example 16 | 890 | 37000 | I | A |
| Example 17 | 800 | 25100 | I | B |
| Example 18 | 1610 | 23100 | II | C |
| Example 19 | 1500 | 23000 | I | C |
| Example 20 | 1210 | 23510 | I | A |
| Example 21 | 1580 | 24750 | I | C |
| Example 22 | 1620 | 14100 | I | B |
| Comparative Example 1 | 610 | 17500 | II | C |
| Comparative Example 2 | 490 | 25000 | II | C |
| Comparative Example 3 | 1800 | 180 | - | - |

It can be seen from analysis of data in Table 2 that the moisture permeability of the composite membrane of the present invention ranged from 510 g/(m²·24h) to 1,620 g/(m²·24h), the air permeability ranged from 14,100 s/100 mL to 37,000 s/100 mL; and in the water wash durability test, the moisture permeability varied between grade I and grade II, and the gas barrier varied between grade A and grade C. The composite membrane of the present invention has excellent moisture permeability, gas barrier performance and water wash durability, and can serve as a heat exchange membrane for assembling a total heat exchange original part according to an existing method for use in an energy recovery ventilator.

It can be seen from analysis of Comparative Examples 1-3 and Example 1 that performance of Comparative Examples 1-3 was inferior to that of Example 1, proving that the composite membrane of the present invention had better performance.

It can be seen from analysis of Examples 15-16 and Example 3 that Examples 15-16 were inferior to Example 3, proving that the composite membrane formed when the mass ratio of the nanomaterial to the polymer mixture is in a preferred range had better performance.

It can be seen from analysis of Examples 17-18 and Example 3 that Examples 17-18 were inferior to Example 3, proving that the composite membrane formed when the mass ratio of the water-soluble inorganic salt to the polymer mixture was in a preferred range had better performance.

It can be seen from analysis of Examples 19-20 and Example 3 that Examples 19-20 were inferior to Example 3, proving that the composite membrane formed when the mass ratio of the first polymer to the second polymer was in a preferred range had better performance.

It can be seen from analysis of Examples 21-22 and Example 3 that Examples 21-22 were inferior to Example 3, proving that the composite membrane formed when the mass ratio of the polymer salt to the first polymer was in a preferred range had better performance.

The applicant declares that the present invention illustrates the detailed method of the present invention through the above examples, while the present invention is not limited to the above detailed method, that is, it does not mean that the present invention must be implemented relying on the detailed method above. Those skilled in the art should know that any improvement on the present invention, equivalent substitutions of various raw materials and addition of auxiliary components of products of the present invention, selection of specific modes, etc., fall within the scope of protection and the scope of disclosure of the present invention.

## Claims

1. A composite membrane, **characterized in that** the composite membrane comprises a porous layer and a non-porous dense layer provided on one side of the porous layer;
the non-porous dense layer comprises a polymer mixture and a nanomaterial;
the polymer mixture comprises a first polymer and a second polymer;
the first polymer comprises a hydrophilic polymer; and
the second polymer comprises an amphiphilic polymer.

2. The composite membrane according to claim 1, wherein the porous layer is other than non-woven fabric.

3. The composite membrane according to claim 1 or 2, wherein the porous layer satisfies one or a combination of more of:
A. a thickness of the porous layer being 5-50 µm
B. a porosity of the porous layer being 30%-60%
C. a pore size of the porous layer being 10-70 nm
D. a tensile strength of the porous layer being ≥ 1,300 kgf/cm²
E. a puncture strength of the porous layer being ≥ 300 gf.

4. The composite membrane according to any one of claims 1-3, wherein materials of the porous layer comprise thermoplastic resin; and
preferably, the thermoplastic resin comprises any one or a combination of at least two selected from the group consisting of polyethylene, polypropylene, polyvinylidene fluoride and polysulfone.

5. The composite membrane according to any one of claims 1-4, wherein the first polymer comprises a group capable of forming a hydrogen bond with water;
preferably, the group is any one or a combination of at least two selected from the group consisting of -OH, -C=O-, -NH₂, -CN, -CONH, -CON-, -C-O-C- and -COOH;
preferably, the first polymer comprises any one or a combination of at least two selected from the group consisting of polyvinylpyrrolidone, polyoxyethylene, polyacrylamide, polyvinyl alcohol, polyacrylic acid, polymethacrylic acid, poly hydroxyethyl methacrylate, polymaleic anhydride, chitosan, cellulose acetate, ethyl cellulose, carboxymethyl cellulose, hypromellose, gelatin and Arabic gum; and
preferably, the first polymer has a molecular weight of 20-1,000 kDa.

6. The composite membrane according to any one of claims 1-5, wherein the second polymer comprises any one or a combination of at least two selected from the group consisting of poly(ethylene glycol)-b-poly(caprolactone) copolymer, poly(ethylene glycol)-b-poly(lactide) copolymer, hydrophobically modified hypromellose and poly(ethylene oxide)-poly(propylene oxide)-poly(ethylene oxide) triblock copolymer; and
preferably, in the second polymer, a molecular weight ratio of hydrophilic segments to hydrophobic segments is 1:(0.2-5).

7. The composite membrane according to any one of claims 1-6, wherein a mass ratio of the first polymer to the second polymer is (2-20): 1;
preferably, a mass ratio of the nanomaterial to the polymer mixture is 1:(0.5-40);
preferably, the nanomaterial comprises any one or a combination of at least two selected from the group consisting of silica, aluminum oxide, montmorillonite, barium titanate, titanium dioxide, barium titanate, gold, polystyrene, silver, lithium aluminum titanium phosphate, cellulose, hydroxyapatite and carbon;
preferably, the nanomaterial is in at least one form of particulate form, sheet form, linear form, rod-shaped form and tubular form; and
preferably, the nanomaterial has a particle size or diameter of 5-500 nm.

8. The composite membrane according to any one of claims 1-7, wherein a thickness of the non-porous dense layer is 0.01-20 µm;
preferably, the non-porous dense layer further comprises a water-soluble inorganic salt;
preferably, a mass ratio of the water-soluble inorganic salt to the polymer mixture is 1:(0.25-40); and
preferably, the water-soluble inorganic salt comprises any one or a combination of at least two selected from the group consisting of magnesium chloride, magnesium sulfate, calcium chloride, calcium nitrate, zinc nitrate, zinc chloride and zinc sulfate.

9. The composite membrane according to any one of claims 1-8, wherein the polymer mixture further comprises a polymer salt;
preferably, the polymer salt comprises a carboxylate-containing polymer salt;
preferably, in the polymer salt, a molar ratio of carboxylates to polymer monomers employed in forming the polymer salt is 1:(1-20);
preferably, the polymer salt has a molecular weight of 2-200 kDa;
preferably, the polymer salt comprises a monovalent organic salt;
preferably, the polymer salt comprises any one or a combination of at least two selected from the group consisting of sodium carboxymethyl cellulose, sodium alginate, potassium alginate, lithium carboxymethyl cellulose, sodium hyaluronate, sodium polymethacrylate, potassium polyacrylate and sodium polyacrylate; and
preferably, a mass ratio of the polymer salt to the first polymer is 1:(2-30).

10. The composite membrane according to any one of claims 1-9, wherein a protective layer is further provided on an outer side of the dense layer;
preferably, a surface contact angle of the protective layer is >90°;
preferably, a thickness of the protective layer is 5-150 µm
preferably, a pore size of the protective layer is 1-70 µm;
preferably, the protective layer comprises non-woven fabric;
preferably, a material of the non-woven fabric comprises any one or a combination of at least two selected from the group consisting of polyolefin, polyester and cellulose; and
preferably, the non-woven fabric comprises any one or a combination of at least two selected from the group consisting of polyethylene terephthalate non-woven fabric, polypropylene non-woven fabric, polyethylene non-woven fabric and cellulose non-woven fabric.

11. A preparation method for the composite membrane according to any one of claims 1-10, **characterized by** comprising steps of:
mixing the first polymer, the second polymer and the nanomaterial, forming a dispersion, coating the dispersion on one side of the porous layer, and drying, to form the non-porous dense layer, so as to render the composite membrane.

12. The preparation method according to claim 11, wherein the preparation method further comprises providing a protective layer on an outer side of the non-porous dense layer; and
preferably, the protective layer is provided by roll pressing and/or adhesive bonding.

13. The preparation method according to any one of claims 11-12, wherein the dispersion further comprises a solvent and an aid, wherein
preferably, the solvent comprises any one or a combination of at least two selected from the group consisting of water, ethanol and isopropanol; and
preferably, the aid comprises a wetting agent and/or an adhesive.

14. The preparation method according to claim 13, wherein based on a total mass of the solvent being 100%, a mass percentage of the wetting agent is 0.1%-1%;
preferably, the wetting agent comprises an anionic surfactant and/or a nonionic surfactant;
preferably, the wetting agent comprises a polyether-modified polysiloxane compound and/or an alkyne diol compound;
preferably, based on a total mass of the solvent being 100%, a mass percentage of the adhesive is 0.5%-5%; and
preferably, the adhesive comprises any one or a combination of at least two selected from the group consisting of a polyvinyl acetate adhesive, a polyacrylic adhesive, a polyurethane adhesive, an epoxy resin adhesive, a phenolic resin adhesive and a silicone adhesive.

15. A fresh air exchange membrane, **characterized by** comprising the composite membrane according to any one of claims 1-10 or the composite membrane prepared by the preparation method according to claims 11-14.
